# EUROPEAN PATENT APPLICATION

(11) **EP 1 388 855 A2**
(43) Date of publication of application: **11.02.2004**
(21) Application number: 03017520.2
(22) Date of filing: 05.08.2003
(51) Int. Cl.: G11B 19/02, G11B 20/10, G11B 27/32

(54) **Information reproducing and recording apparatus, method for reproducing and recording information and information recorded medium**

(30) Priority: 07.08.2002 JP 2002229558
(71) Applicant: Pioneer Corporation, Meguro-ku, Tokyo (JP)
(72) Inventor: Sakamoto, Yuji, Pioneer Corporation, Kawagoe-shi, Saitama-ken (JP)
(74) Representative: Klingseisen, Franz, Dipl.-Ing.

(57) **Abstract**

An information reproducing and recording apparatus (100) compares management information corresponding to the program information recorded on the first recording medium (10) and management information corresponding to the program information recorded on the second recording medium (11), and determines whether or not the management information on the first recording medium (10) is present on the second recording medium (11). And then, the apparatus acquires attribute information in relation to the program information in cases where it is determined that the management information on the first recording medium (10) is not present on the second recording medium (11). And then, the apparatus determines, by referring a database having history information including attribute information in relation to the program information recorded on the second recording medium (11), whether or not the acquired attribute information is present in the database. And then, the apparatus records the program information recorded on the first recording medium (10) onto the second recording medium (11) , in cases where it is determined . that the attribute information is not present on the database.

## Description

### BACKGROUND OF THE INVENTION

### Field of the Invention:

The present invention relates to a method and apparatus for reproducing and recording information, for example, to the method and apparatus that are capable of performing various types of processing, such as retrieval of program information by utilizing management information corresponding to the program information recorded on an information recording medium.

### Description of Related Art:

On recording mediums such as optical disks and magnetic disks, there are recorded TOC (Table Of Contents) information serving as management information corresponding to program information as well as program information such as music data (audio data). This TOC information includes absolute times showing a start position of each program information and an end position of the last program information on a recording medium. A difference between the start positions of any program information and the next program information becomes a performance time.

In a conventional information reproducing and recording apparatus, this TOC information has been utilized for processing, such as retrieval of various kinds of information. For instance, Japanese Patent Laid-open publication No. 2000-189048 discloses an apparatus that can prevent double copying in copying audio data recorded on a CD (Compact Disc) into a HD (Hard Disc Drive) . In this apparatus, for examining (searching) whether or not the same audio data as audio data recorded on the CD has already been recorded in the HD, the TOC information corresponding to audio data recorded on each disc is subjected to comparison with that to the audio data to be searched. If the comparison results in an agreement of the TOC information, the apparatus determines that the same audio data as one recorded on the CD has already been recorded in the HD, and controls the audio data reproduced fromthe CD so that such audio data is prevented from being recorded into the HD.

However, there are some cases where different pieces of TOC information correspond to the same program information. For example, this is the case that the same music released from the same artist is provided as different modes (such as the same music included on both a single CD and an album CD, and the same music included on both an album CD and a best-album CD).

In such a case, the conventional information reproducing and recording apparatus could not be able to prevent the double copying completely. That is, though program information recorded on a CD has already been in a HD, the double copying of the program information into the HD is unavoidable in some cases. This means that, ifdesiredtoavoidtheduplicatecopying, the determination for avoiding the doubly copying is imposed on a user. In other words, the user should reproduce the program information recorded in the HD to examine programs against the duplicate copying and should keep the memory capacity of the HD through complex manual operations.

### SUMMARY OF THE INVENTION

It is therefore an object of the present invention to provide an information reproducing and recording apparatus, a method of reproducing and recording information, information recorded medium which are able to not merely prevent program information from being duplicate-copied but alsoimprove affinity and convenience for users.

The above object of the present invention can be achieved by an information reproducing and recording apparatus provided with: a reproducing unit which reproduces program information recorded on a first recording medium; a recording unit which records program information onto a second recording medium; and a controller which controls both of the reproducing unit and the recording unit, wherein the controller comprise: an information recording determining device which compares management information corresponding to the program information recorded on the first recording medium and management information corresponding to the program information recorded on the second recording medium, and determines whether or not the management information on the first recording medium is present on the second recording medium;an attributeinformation acquiring device which acquires attribute information in relation to the program information in cases where it is determined that the management information on the first recording medium is not present on the second recording medium; an attribute information recording determining device which determines, by referring a database having history information including attribute information in relation to the program information recorded on the second recording medium, whether or not the acquired attribute information is present in the database; and an information recording controlling device which controls, in cases where it is determined that the attribute information is not present on the database, both the reproducing unit and the recording unit in order to record the program information recorded on the first recording medium onto the second recording medium.

According to the present invention, when comparison of both pieces of management information corresponding to the program information shows that the pieces of management information dif fer from each other, a further determination is made to know whether or not the acquired attribute information in relation to the program information is present in the database. This makes it possible to finally check if or not the program information recorded on the first recording medium has already been recorded on the second recording medium. Thus, even if different pieces of management information are given to the same program information, recording the program information on the second recording medium in a duplicate manner can be avoided. It is therefore possible to improve affinity and convenience for users.

In one aspect of the apparatus of the present invention, the information recording controlling device, in cases where it is determined that the attribute information is not present on the database, controls so that the program information recorded on the first recording medium is recorded on the second recording medium and stores the attribute information in relation to the program information recorded on the second recording medium onto the database as history information.

In another aspect of the apparatus of the present invention, the attribute information acquiring device acquires the attribute information, in cases where it is determined that it is possible to acquire the attribute information, and the information recording controlling device controls both of the reproducing unit and the recoding unit so that the program information recorded on the first recording medium is recorded on the second recording medium, in cases where it is determined that it is impossible to acquire the attribute information.

In further aspect of the apparatus of the present invention, the attribute information includes a plurality of types of information in relation to the program information, the attribute information recording determining device determines, by referring the database, whether or not, of the plurality of types of information included in the acquired attribute information, either a predetermined one type of information or a combination of the two or more types of information is present in the database, and the information recording controlling device controls both of the reproducing unit and the recoding unit so that the program information recorded on the first recording medium is recorded on the second recording medium, in cases where it is determined that either the predetermined one type of information or the combination of the two or more types of information is not present in the database.

In still further aspect of the apparatus of the present invention, the first recording medium has a plurality of program information, and the information recording controlling device, in controlling both of the reproducing unit and the recording unit so that, of the plurality of types of program information recorded on the first recording medium, program information of which attribute information is determined not to be present in the database is recorded on the second recording medium, mutually relates the program information and particular program information of the plurality of types of program information, the particular program information having already been recorded on the second recording medium.

The above object of the present invention can be achieved by a method of reproducing program information recorded on a first recoding medium and recording program information onto a second recording medium provided with the processes of: comparing management information corresponding to the program information recorded on the first recording medium and management information corresponding to the program information re'corded on the second recording medium, and determining whether or not the management information on the first recording medium is present on the second recording medium; acquiring attribute information in relation to the program information in cases where it is determined that the management information on the first recording medium is not present on the second recording medium; determining, by referring a database having history information including attribute information in relation to the program information recorded on the second recording medium, whether or not the acquired attribute information is present in the database; and recording the program information recorded on the first recording medium onto the second recording medium, in cases where it is determined that the attribute information is not present on the database.

The above object of the present invention can be achieved by an information recorded medium wherein a program for computer which reproduces program information recorded on a first recoding medium and records program information onto a second recording medium, is recorded so as to be read by the computer, the program makes the computer function as: comparing management information corresponding to the program information recorded on the first recording medium and management information corresponding to the program information recorded on the second recording medium, and determining whether or not the management information on the first recording medium is present on the second recording medium; acquiring attribute information in relation to the program information in cases where it is determined that the management information on the first recording medium is not present on the second recording medium; determining, by referring a database having history information including attribute information in relation to the program information recorded on the second recording medium, whether or not the acquired attribute information is present in the database; and recording the program information recorded on the first recordingmedium onto the second recording medium, in cases where it is determined that the attribute information is not present on the database.

### BRIEF DESCRIPTION OF THE DRAWINGS

Other objects and aspects of the present invention will become apparent from the following description and embodiments with reference to the accompanying drawings in which:
FIG. 1 exemplifies a schematic block diagram of an audio apparatus according to an example of the present invention;
FIG. 2 is a flowchart showing the processing carried out by a controller in reproducing music data recorded on a CD and recording the music data on a HD;
FIGs . 3A and 3B are conceptual illustrations each showing music data recorded on the CD and HD in order of their recorded positions; and
FIG. 4 is a view showing a list of music titles displayed on a screen of an operation/display panel.

### DETAILED DESCRIPTION OF PREFERRED EMBODIMENTS

Referring to the accompanying drawings, a preferred embodiment of the present invention will now be explained. The following embodiment will be described about an audio apparatus to which the present invention is applied.

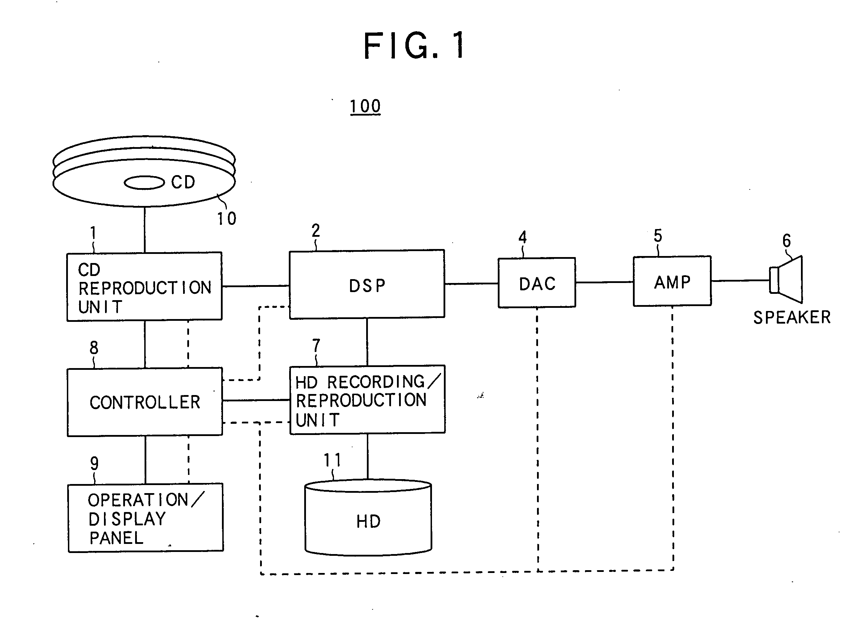

First of all, in reference to FIG. 1, the configuration and functions of the audio apparatus according to the present embodiment will now be described.

FIG. 1 shows a schematic block diagram of the audio apparatus in accordance with the present embodiment. The audio apparatus is provided with a CD reproduction unit 1 , DSP (Digital Signal Processor) 2, DAC (Digital-to-Analog Converter) 4, AMP (amplifier) 5, speaker 6, HD recording/reproduction unit 7, controller 8, and operation/display panel (unit) 9.

Of these components, the CD reproduction unit 1 serves as a reproducing unit which reproduces the program information (in the present embodiment, the program information is exemplif ied as music data) recorded on a CD 10 as a first recording medium. The DSP 2 is placed to apply first digital signal processing to music data reproduced by the CD reproduction unit 1 so as to output music data that has received the digital signal processing. The DAC 4 is placed to digital/analog-convert music data outputted from the DSP2 so that the processed analog audio signal is outputted. The AMP 5 is in charge of amplifying the analog audio signal outputted fromthe DAC 4 to output its amplified audio signal. The speaker 6 is placed to output the analog audio signal from the AMP 5 in the form of sound waves. Further, the HD recording/reproduction unit 7 is provided to function as a recording unit for recording the music data from the DSP 2 on an HD as a second recording medium and to function as a reproducing unit for reproducing the music data recorded on the HD 11. The controller 8 is responsible for controllingthe operations carried out by the above individual components. Further, the operation/display panel 9 is equipped with operation buttons to accept various operational commands (such as commands for reproducing and recording) and a display device to display attribute information concerning music data recording on the CD 10 or HD11. The attribute information includes music titles, artist names, disk title, and track titles. Incidentally, in FIG. 1, solid lines illustrate flows of data, while dotted lines illustrate flows of control signals.

The CD reproduction unit 1 is equipped with various components, which include a loading mechanism (a mounting mechanism) with which a CD 10 is loaded, a pickup for optically reading music data recorded on the CD 10, a spindle motor for rotationally driving the CD 10, and a servo circuit for applying servo control to both the spindle motor and the pickup. Hence these components enable music data (i.e., digital data signals of LRCK, BCK, BDATA, C2POandothers) to be reproduced and outputted to the DSP 2. In addition , the CD reproduction unit 1 is conf igured to the capability of reading out TOC information recorded as management information in an innermost circumferential portion of the CD 10 and outputting the read-out the TOC information toward the controller 8.

The CD reproduction unit 1 is able to read out text information from the CD 10 for its output to the controller 8, if the protection is not applied to CD 10. The text information includes attribute information in relation to music data, such as music titles and artist names.

Incidentally, since known techniques can be applied to the CD reproduction unit 1, a detailed explanation of this unit 1 will be omitted. An ATAPI connection can be used in the CD reproduction unit 1.

Although, in the present embodiment, the CD reproduction unit 1 has been exemplified as one example of the reproducing unit according to the present invention, this is not a definitive configuration. Alternatively, such a reproducing unit can be realized by employing a DVD reproduction unit configured to reproduce music data recorded on a DVD or an MD reproduction unit configured to reproduce to music data recorded on an MD. Still, both of the DVD reproduction unit and the MD reproduction unit can be combined to each other to be applied to the reproducing unit.

The DSP 2, which has logic circuits and memory circuits, is able to apply fast digital signal processing to music data reproduced by the CD reproduction unit 1. To be specific, the DSP2 applies, to music data consisting of RF (Radio Frequency) signals reproduced by the CD reproduction unit 1, known sound processingsuch asEFM(Eight to Fourteen Modulation)demodulation, so that the resultant music data from this demodulation is supplied to both the DAC 4 and the HD recording/reproduction unit 7.

The HD recording/reproduction unit 7 is equipped with a buffer memory, HD drive and other constituents, wherein music data outputted from the DSP 2 is temporarily stored in the buffer memory, and then recorded on the HD 11 by the HD drive. By contrast, the HD recording/reproduction unit 7 allows music data reproduced from the HD 11 by the HD drive to be stored temporarily in the buffer memory, before being supplied to the DSP 2.

In the HD 11 are recorded a plurality of pieces of music data and TOC information corresponding to (in relation to) each music data, the TOC information serving as management information for the music data. This TOC information is read out from the CD 10 by the CD reproduction unit 1, and then recorded on the HD 11 via the controller 8 and the HD recording/reproduction unit 7.

Moreover, in the HD 11, a history information database isbuilt, whichmemorizes (stores) historyinformationinrelation to music data recorded therein. This history information includes TOC information corresponding to music data recorded on the HD 11, attribute information in relation to the music data (for example, music titles, artist names, disk (album) title, and track titles) , recorded date and time, and a recorded capacity, which are related to each other across such various kinds of information.

Such history information is memorized into the history information database when, for instance, music data is read out form the CD 10 to be recorded the HD 11. By way of example, in cases where text information including attribute information can be read out from a CD 10 based on the CD text standards, attribute information regarding music data sent from the CD 10 to the HD 11 for recording is memorized into the history information database, together with the TOC information corresponding to the music data. On the contrary, in the event that it is not impossible to read out text information including attribute information from the CD 10, the attribute information regarding music data to be recorded is retrieved (searched) in a database for attribute information retrieval described later, on the basis of the TOC information, and then retrieved information is stored into the history information database.

In the HD 11 is built an attribute information retrieving database in which TOC information corresponding to music data and attribute information in relation to the music data are stored with both of the TOC information and the attribute information related to each other. The information to be stored into this attribute information retrieving database can be downloaded from a server on the Internet. In this attribute information retrieving database, there are memorized (stored) not only TOC information corresponding to each piece of music data which is not recorded on the CD 10 and HD 11 in the present embodiment, but also attribute information concerning the music data. In other words, the attribute information retrieving database is directed to retrieval of the attribute information concerning music data, based on the TOC information corresponding to the music data.

The HD recording/reproduction unit 7 can be accomplished based on application of known techniques, so its detailed explanation will be omitted. The present embodiment adopts the HD recording/reproduction unit 7 as an example of a recording unit according to the present invention, but the present invention is not confined to such a mode. An alternative is that the recording unit can be realized by various units, such as a CD-R recording/reproduction unit for recording and reproducing music data on and from a CD-R and a DVD-R/W recording/reproduction. unit for recording and reproducingmusic data on and from a DVD-R/W. Still both the CD-R and DVD-R/W recording/reproduction units may be used together for the recording unit of the present invention.

The controller 8 is provided with a CPU for calculation, a working RAM, and a ROM in which various kinds of programs and data are stored. The controller 8 is capable of controlling the reproducing operations at the CD reproduction unit 1 and the recording/reproducing operations at the HD recording/reproduction unit 7.

In the ROM of the controller 8 is stored an information reproducing/recording processing program, which will enable the controller 8 to function as a computer according to the present invention.

Practically, the controller 8 is able to function as an information recording determining device, which compares TOC information corresponding to music data recorded on a CD 10 and TOC information corresponding to music data recorded on the HD11 in order to determine whether or not the TOC information on the CD 10 is present on the HD 11.

The controller 8 is also able to function as an attribute information acquiring device, which further determines whether or not attribute information in relation to music data recorded on the CD 10 can be acquired from for example either the text information or the attribute information retrieving database, in cases where it is determined that the TOC information on the CD 10 is not present in the HD 11 (for example, there is neither a complete agreement nor an agreement within an allowable range between both pieces of the TOC information subjected to the comparison). If the determination reveals that such acquisition is possible, the attribute information is acquired.

Further, the controller 8 is able to function as an attribute information recording determining device. Through the operations of this determining device, the history information database is made reference to determine the acquired attribute information exists in the database.

Still further, in cases where it is determined that the attribute information does not exist in the history information database, the controller 8 controls both the CD reproduction unit 1 and the HD recording/reproduction unit 7 so as to reproduce music data from the CD 10 and then to record the music data on the HD 11.

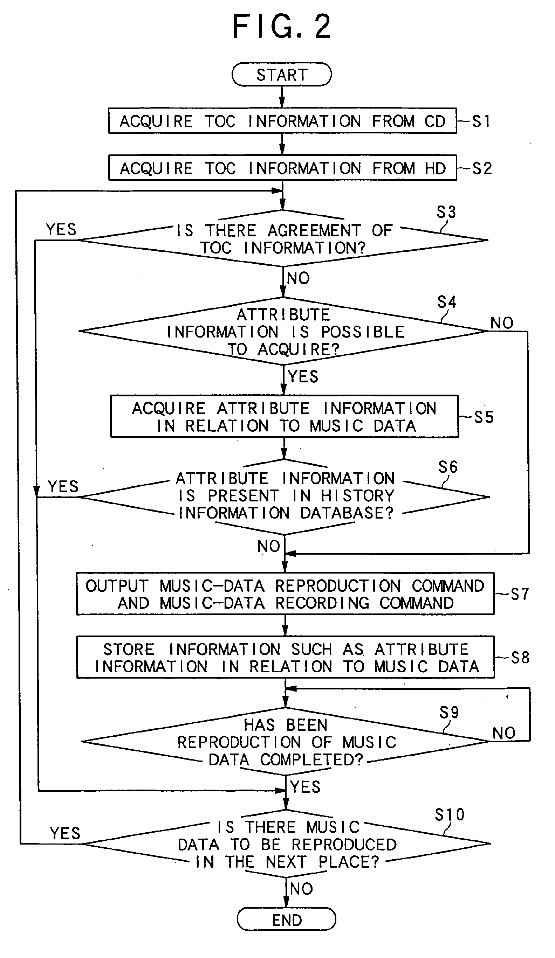

Referring to FIG. 2, the operations of the audio apparatus in the present embodiment will now be described.

FIG. 2 is a flowchart showing the processing carried out by the controller 8 when music data on a CD 10 is reproduced and then recorded on the HD 11.

In the processing shown in FIG. 2, in the case that the CD reproduction unit 1 has been loaded with the CD 10, the CD reproduction unit 1 reads out TOC information recorded in an inner most area of the CD 10, and then output the read-our TOC information to the controller 8 . Thus the controller 8 acquires the TOC information coming from the CD reproduction unit 1 (step S1).

A user operates by hand the operation/display panel 9 to enter commands for both reproduction of music data recorded on the CD10 and recording thereof (commands for selecting plural pieces of music can be permitted). In response to this entering operation, the controller 8 acquires TOC information corresponding to data of all pieces of music recorded on the HD 11 from the HD recording/reproduction unit 7, via the HD reproduction unit 7 (step S2).

Next, the controller 8 compares the acquired TOC information each other, and determines whether or not the TOC information on the CD 10 is present on the HD 11 (step S3). When plural pieces of music have been selected, the above comparison is conducted such that the TOC information corresponding to music data to be reproduced first from the CD 10 is compared with all the TOC information corresponding to data of all pieces of music recorded on the HD 11. For example, the controller 8 checks through the comparison whether or not the TOC information corresponding to the music data stored on the HD11 includes some TOC information that agrees completely with (or agrees, within an allowable range, with) the TOC information corresponding to the music data recorded on the CD 10 . If this determination shows that there is no agreement, the controller 8 concludes that the TOC information on the CD 10 is not present on the HD 11, before shifting its processing to step S4. On the contrary, when the determination reveals that there is an agreement, the controller 8 recognizes that the music data on the CD 10 has already been recorded on the HD 11, then ending the processing.

Then at step S4, the controller 8 determines whether or not the attribute information in relation to the music data on the CD 10 is possible to acquire from, for example, either the text information or the attribute information retrieving database. In other words, the controller 8 checks if or not the text information including the attribute information can be read out and acquired from the CD 10 based on the CD text standards. When the reading is possible, the controller 8 acquires, from the text information, the attribute information in relation to the music data recorded on the CD 10 (step S5).

In contrast, in cases where it is impossible to acquire, from the CD 10, the text information including the attribute information, the controller 8 then proceed to the determination whether or not it is possible to acquire the attribute information corresponding to the TOC information acquired step S1, from the attribute information retrieving database. If this determination is affirmative, that is, such acquisition is possible, the controller 8 acquires the attribute information in relation to the music data recorded on the CD 10, from the attribute information retrieving database.

By contrast, if the determination is negative, that is, such attribute information cannot be acquired from even the attribute information retrieving database, the controller 8 recognizes that the music data recorded on the CD 10 has not been present on the HD 11, then shifting to step S7.

The controller 8 then determines, by making reference to the history information database, whether or not the acquired attribute information is present in the history information database (step S6). In other words, it is determined whether or not, of the pieces of the acquired attribute information, the title of each piece of music is stored in the history information database. As a result, when it is determined that the music title is stored in the history information database, the controller 8 concludes that the music data recorded on the CD 10 has already been recorded on the HD 11, and then terminating the processing without performing control for recoding the music data.

On the other hand, if it is determined that, of the pieces of the attribute information, a music title is not stored in the history information database, the controller 8 recognizes that the music data recorded on the CD 10 has not been recorded on the HD 11. In this case, in order to allow the music data recorded on the CD 10 to be recorded on the HD 11, the controller 8 gives not only a reproduction command to the CD reproduction unit 1 but also a recording command to the HD recording/reproduction unit 7 (step S7). This allows the music data to be reproduced from the CD 10, thus the reproduced music data being sent to the speaker 6 via the DSP 2, DAC 4 and AMPS, thus being outputted from the speaker 6 . Concurrently with this, the reproduced music data is sent to the HD via the DSP2 and the HD recording/reproduction unit 7, and then recorded on the HD 11. Incidentally, in the case that a switch for selectively. switching a path of the music data from either a path of the DSP 2 to the DAC 4 or a further path from the DSP 2 to the HD recording/reproduction unit 7 and commands for reproduction and recording the music data recorded on the CD 10 are inputted at the operation/display panel 9, it may be configured such that the music data is outputted to only the path of the DSP 2 to the HD recording/reproduction unit 7.

Next, the controller 8 stores, into the HD 11, the TOC information corresponding to music data via the HD recording/reproduction unit 7, with the TOC information related to the music data. The controller 8 stores, into the history information database in the HD 11, via the HD recording/reproduction unit 7, the TOC information corresponding to the music data, attribute information (text information or attribute information acquired from the attribute information retrieving database) , and history information such as recording date and memory capacity (step S8).

Then the controller 8 determines if the reproduction of the music data has been completed or not (step S9). And if it is determined that the reproduction has been completed, the controller 8 further checks if there is data of another piece of music or not (step S10). When there is music data that should be reproduced in the next place, the processing is made to return to step 53, so that the controller 8 will perform the same processing as the above toward the next music data. However, if there is no such music data for the next reproduction, the processing is terminated.

As described above, in the present embodiment, when comparison of both pieces of TOC information shows that the pieces of TOC information differ from each other, a further determination is made to know whether or not the attribute information of music data is present in the history information database. This makes it possible to finally check if or not music data recorded on the CD 10 has already been recorded on the HD 11. Thus, even if different pieces of TOC information are given to the same music data, recording the music data on the HD 11 in a duplicate manner can be avoided. It is therefore possible to improve affinity and,convenience for users.

As to the above configurations, there can be provided various modifications as follows.

For example, the controller 8 may be configured so that, at step S6, the controller 8 determines if or not there a combination of two or more types of information (among a plurality of types information included in the attribute information acquired by making reference to the history information database) are present in the history information database. For example, of all the pieces of attribute information, the controller 8 can determine whether or not a combination of a music title and an artist name is recorded in the history information database. That is, it can be determined whether or not a music title and an artist name are recorded as a pair for data of one piece of music. If the determination is that there is no such a pair recorded, a reproduction command is given to the CD reproduction unit 1 and a recording command is given to the HD recording/reproduction unit 7, so that such music data recorded on the CD 10 is recorded on the HD 11.

As a result, even when, of the pieces of attribute information in relation to all the music data recorded on the CD 10, only a certain piece of information (for example, a music title) is the same as that of the music data recorded on the HD 11 with the remaining pieces of information different from that, it can be avoided that it is determined by mistake that music data on the CD 10 has already been recorded on the HD 11 and remove from being recorded on the HD 11.

Furthermore, in the foregoing embodiment, there is a modification about control of both the CD reproduction unit 1 and the HD recording/reproduction unit 7 in such a manner that, of the data of two or more pieces of music recorded on the CD 10, music data, of which attribute information is judged not to be present in the history information database, is recorded on the HD 11. That is, in such a control operation, both of the music data of which attribute information is judged not to be present in the history information database and music data (among the data of the two or more pieces of music) that has already been recorded on the HD 11 are made to relate to each other.

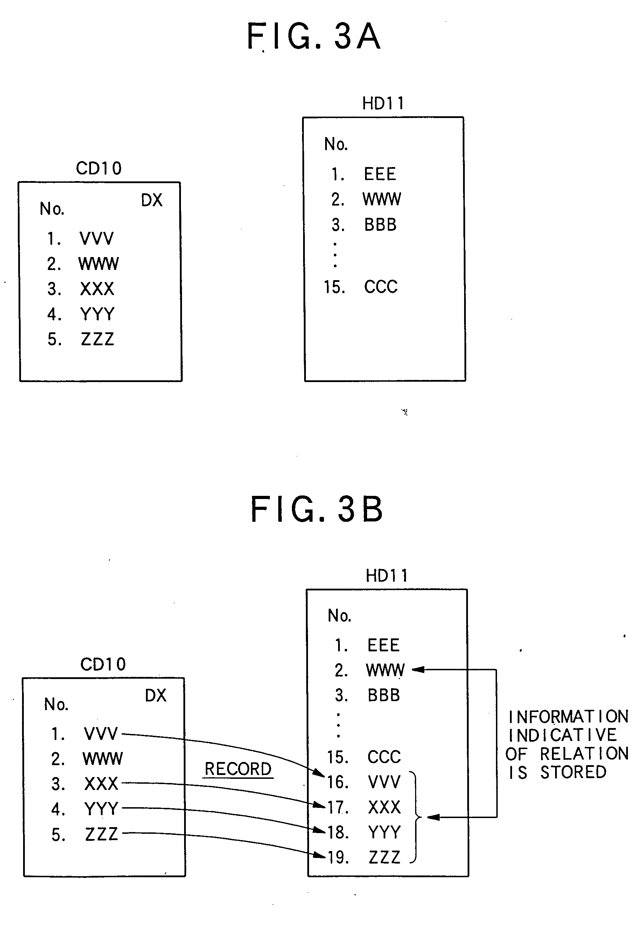

FIGS. 3A and 3B are conceptual illustrations, which represent the music data recorded on the CD 10 and the HD 11 in the order of the recorded positions, respectively. FIG. 3A exemplifies a CD 10 of which disk title is "DX," on which data of five pieces of music (their titles are "VVV" to "ZZZ") are recorded. On the other hand, on the HD11 are recorded data of a large number of pieces of music, in which, among all the music data on the CD 10, only the data of the music title "WWW" is included.

In such a case, when the processing shown in FIG. 2 has been performed, of the data of the five pieces of music recorded on the CD 10, the data of the four pieces of music other than the data of the music title "WWW," that is, the data of music titles "'VVV," "XXX" to "ZZZ," are transferred to the HD 11 for recording therein, as shown in FIG. 3B. During this operation, the controller 8 can be configured such that the music data of the music title "WWW" already been recorded on the HD 11 and the music data of the music titles "VVV," "XXX" to "ZZZ" to be recorded newly on the HD 11 are mutually related, and information indicative of such relation are stored in the history information database on the HD 11 . The information indicative of such relation expresses, for example, that the music data of the already recorded music title "WWW" should be inserted between the two sets of the music data of the newly recorded music titles "VVV" and "XXX."

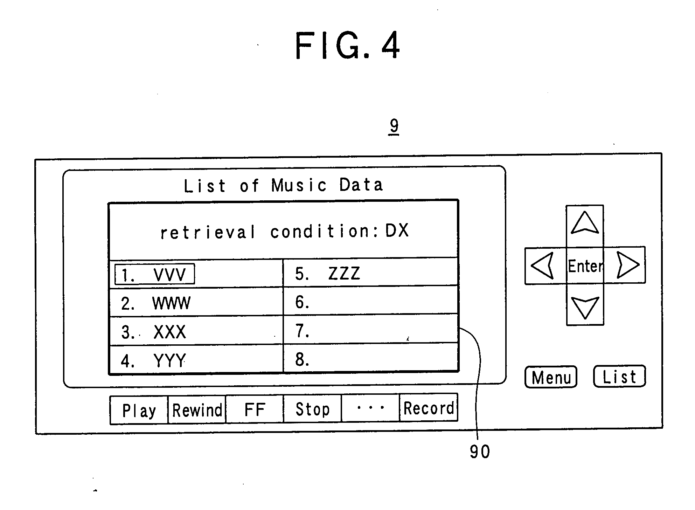

Thus, when a user operates the operation/display panel 9 to give the title of a desired disk (for example, a disk title "DX") on the HD 11 as a piece of retrieval information, the controller 8 responds to this operation. Namely, based on the historyinformation memorized by the history information database, the music titles "VVV" to "ZZZ" recorded on (corresponding to) the disk of which title is "DX" is displayed as shown in FIG. 4 on a screen 90 of the operation/display panel 9 in the order of arrangements of those music data recorded on the CD 10. In this way, the user can give the operation/display panel 9 a command for reproducing two or more pieces of music successively, which makes it possible that plural pieces of music are subjected to reproduction in turn in the order of music titles, for example, shown in FIG. 4.

Accordingly, this further improves affinity and convenience for users.

Still, in the foregoing embodiment, the history information database has been built on the HD 11, but this is a definitive list. By way of example, a nonvolatile memory (for example, EEPROM (Electrically Erasable Programmable Read Only Memory) in which the history information database is built may be used.

Although the foregoing embodiment has employed the configuration where the music data is recorded on the HD 11 with no processing made upon it, there can be provided further modifications. For instance, music can be compressed on the formats of MP3, ATRAC3, and others, or audio data can be encrypted for copyright protection, before being recorded into the HD 11.

In the foregoing embodiment, the recording processing has been exemplified as processing on the digital format, but A/D converters can be added to perform the recording processing on the analog format.

Still, the foregoing embodiment has been explained on condition that the single controller 8 is in charge of controlling both of the reproducing operations at the CD reproduction unit 1 and the recording/reproducing operations at the HD recording/reproduction unit 7. Alternatively, in order to individually controlling the operations at the CD reproduction unit 1 and the HD recording/reproduction unit 7, two controllers can be provided so as to operate mutually independently. In such a case, the controllers is responsible for the reproducing operations at the CD reproduction unit 1 and the recording/reproducing operations at the HD recording/reproduction unit 7 on a mutually synchronized basis.

Further, the foregoing embodiment has been described about a mode in which the information reproducing and recording apparatus is reduced into practice as the audio apparatus and the program information is made up of music data. However, the present invention is not limited such a mode. By way of example, the information reproducing and recording apparatusmay be applied to a video apparatus, in which the program information is composed of image(video) data.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information reproducing and recording apparatus **characterized in that** the apparatus (100) comprises:
a reproducing unit (1) which reproduces program information recorded on a first recording medium (10);
a recording unit (7) which records program information onto a second recording medium (11); and
a controller (8) which controls both of the reproducing unit (1) and the recording unit (7),
wherein the controller (8) comprise:
an information recording determining device (8) which compares management information corresponding to the program information recorded on the first recording medium (10) and management information corresponding to the program information recorded on the second recording medium (11), and determines whether or not the management information on the first recording medium (10) is present on the second recording medium (11);
an attribute information acquiring device (8) which acquires attribute information in relation to the program information in cases where it is determined that the management information on the first recording medium (10) is not present on the second recording medium (11);
an attribute information recording determining device (8) which determines, by referring a database having history information including attribute information in relation to the program information recorded on the second recording medium (11), whether or not the acquired attribute information is present in the database; and
an information recording controlling device (8) which controls, in cases where it is determined that the attribute information is not present on the database, both the reproducing unit (1) and the recording unit (7) in order to record the program information recorded on the first recording medium (10) onto the second recording medium (11).

2. The information reproducing and recording apparatus (100) according to claim 1, wherein the information recording controlling device (8), in cases where it is determined that the attribute information is not present on the database, controls so that the program information recorded on the first recording medium (10) is recorded on the second recording medium (11) and stores the attribute information in relation to the program information recorded on the second recording medium (11) onto the database as history information.

3. The information reproducing and recording apparatus (100) according to claim 1, wherein the attribute information acquiring device (8) acquires the attribute information, in cases where it is determined that it is possible to acquire the attribute information, and
wherein the information recording controlling device (8) controls both of the reproducing unit (1) and the recoding unit (7) so that the program information recorded on the first recording medium (10) is recorded on the second recording medium (11), in cases where it is determined that it is impossible to acquire the attribute information.

4. The information reproducing and recording apparatus (100) according to claim 1, wherein the attribute information includes a plurality of types of information in relation to the program information,
the attribute information recording determining device (8) determines, by referring the database, whether or not, of the plurality of types of information included in the acquired attribute information, either a predetermined one type of information or a combination of the two ormore types of information is present in the database, and
the information recording controlling device (8) controls both of the reproducing unit (1) and the recoding unit (7) so that the program information recorded on the first recording medium (10) is recorded on the second recording medium (11), in cases where it is determined that either the predetermined one type of information or the combination of the two or more types of information is not present in the database.

5. The information reproducing and recording apparatus (100) according to claim 1, wherein the first recording medium (10) has a plurality of program information, and
the information recording controlling device (8), in controlling both of the reproducing unit and the recording unit so that, of the plurality of types of program information recorded on the first recording medium (10) , program information of which attribute information is determined not to be present in the database is recorded on the second recordingmedium (11), mutually relates the program information and particular program information of the plurality of types of program information, the particular program information having already been recorded on the second recording medium (11).

6. A method of reproducing program information recorded on a first recoding medium and recording program information onto a second recording medium, **characterized in that** the method comprises the processes of:
comparing management information corresponding to the program information recorded on the first recording medium and management information corresponding to the program information recorded on the second recording medium, and determining whether or not the management information on the first recording medium is present on the second recording medium;
acquiring attribute information in relation to the program information in cases where it is determined that the management information on the first recording medium is not present on the second recording medium;
determining, by referring a database having history information including attribute information in relation to the program information recorded on the second recording medium, whether or not the acquired attribute information is present in the database; and
recording the program information recorded on the first recording medium onto the second recording medium, in cases where it is determined that the attribute information is not present on the database.

7. An information recorded medium wherein a program for computer which reproduces program information recorded on a first recoding medium and records program information onto a second recording medium, is recorded so as to be read by the computer, the program makes the computer function as:
comparing management information corresponding to the program information recorded on the first recording medium and management information corresponding to the program information recorded on the second recording medium, and determining whether or not the management information on the first recording medium is present on the second recording medium;
acquiring attribute information in relation to the program information in cases where it is determined that the management information on the first recording medium is not present on the second recording medium;
determining, by referring a database having history information including attribute information in relation to the program information recorded on the second recording medium, whether or not the acquired attribute information is present in the database; and
recording the program information recorded on the first recording medium onto the second recording medium, in cases where it is determined that the attribute information is not present on the database.
